# EUROPÄISCHE PATENTSCHRIFT

(11) **EP 2 106 356 B1**
(45) Veröffentlichungstag und Bekanntmachung des Hinweises auf die Patenterteilung: **06.01.2016**
(21) Anmeldenummer: 08709221.9
(22) Anmeldetag: 26.02.2008
(51) Int. Cl.: B60K 17/24, F16F 1/38

(54) **LAGERVORRICHTUNG ZUR SCHWINGUNGSENTKOPPELTEN DREHLAGERUNG EINER ZWISCHENWELLE AM MOTORBLOCK EINES KFZ UND VERFAHREN ZUR SCHWINGUNGSENTKOPPELTEN DREHLAGERUNG EINER ZWISCHENWELLE AM MOTORBLOCK EINES KFZ**
BEARING DEVICE FOR THE VIBRATION-DECOUPLED ROTATABLE SUPPORT OF AN INTERMEDIATE SHAFT ON THE ENGINE BLOCK OF A MOTOR VEHICLE, AND METHOD FOR THE VIBRATION-DECOUPLED ROTATABLE SUPPORT OF AN INTERMEDIATE SHAFT ON THE ENGINE BLOCK OF A MOTOR VEHICLE
DISPOSITIF DE PALIER POUR LE MONTAGE EN ROTATION DECOUPLE EN OSCILLATION D'UN ARBRE INTERMEDIAIRE SUR LE BLOC-MOTEUR D'UN VEHICULE A MOTEUR ET PROCEDE POUR LE MONTAGE EN ROTATION DECOUPLE EN OSCILLATION D'UN ARBRE INTERMEDIAIRE SUR LE BLOC-MOTEUR D'UN VEHICULE

(30) Priorität: 14.03.2007 DE 102007012958
(43) Veröffentlichungstag der Anmeldung: 07.10.2009
(73) Patentinhaber: Neapco Europe GmbH, 52351 Düren (DE)
(72) Erfinder: FELCHNER, Christian, 42855 Remscheid (DE); BISKUP, Ole, 50354 Hürth (DE); HÖKS, Luis, 52249 Eschweiler (DE)
(74) Vertreter: Patentanwälte Bauer Vorberg Kayser
(86) Internationale Anmeldenummer: PCT/EP2008/052327
(87) Internationale Veröffentlichungsnummer: WO 2008/110455

(56) Entgegenhaltungen:
- DE-A1- 3 446 518
- GB-A- 2 136 373
- US-A- 3 003 831
- US-A1- 2004 011 584

## Beschreibung

Gegenstand der vorliegenden Erfindung ist eine Lagervorrichtung zur schwingungsentkoppelten Drehlagerung einer Zwischenwelle am Motorblock eines Kfz und ein Verfahren zu einer solchen Drehlagerung.

Die vorliegende Anmeldung betrifft allgemein den Bereich des Antriebsstrangs bei einem Kfz, hier vor allem bei einem Kfz mit angetriebenen Vorderrädern, bei dem der Motor quer eingebaut ist. Bei derartigen Kfz tritt das Problem auf, dass das Vorderachsdifferenzial nicht mittig verbaut werden kann. Dies hat unmittelbar zur Folge, dass die Antriebswelle n, welche zwischen Differenzialgetriebe und den angetriebenen Vorderrädern eingefügt sind, grundsätzlich unterschiedliche Längen aufweisen müssen. Dies hat sich insbesondere bei drehmomentstarken Motoren als nachteilig erwiesen, da unterschiedlich dimensionierte rechte und linke Antriebswellen unterschiedliche mechanische Eigenschaften insbesondere hinsichtlich ihrer Torsionssteifigkeit aufweisen. Dies macht sich z.B. beim starken Beschleunigen negativ im Fahrverhalten des Kraftfahrzeugs bemerkbar. Aus diesem Grunde werden bei aktuellen Kraftfahrzeugen rechte und linke Antriebswellen mit identischen Dimensionierungen verbaut, wobei zwischen eine der beiden Antriebswellen und das Differenzialgetriebe eine Zwischenwelle für den Längenausgleich des durch die außermittige Montage des Differenzialgetriebes verursachten Versatzes eingefügt ist. Diese Zwischenwelle wird dabei drehbar am Motorblock des Kraftfahrzeugs gelagert, so dass sie bei Federbewegungen der angetriebenen Vorderräder des Kraftfahrzeugs (im Gegensatz zu den Antriebswellen) nicht gegenüber der Drehachse des Differenzialgetriebes bewegt wird. Sie kann daher entsprechend großzügig dimensioniert werden, wodurch eine sehr hohe Torsionssteifigkeit erreicht wird. Mit der vorgenannten Konstruktion ist es möglich, trotz der unterschiedlichen Dimensionen der zwischen die angetriebenen Vorderräder und das Differenzialgetriebe eingefügten Antriebs- bzw. Zwischenwellen rechts- und linksseitig praktisch identische Torsionseigenschaften sicherzustellen, so dass auch bei drehmomentstarken Motoren keine negative Beeinflussung des Fahrverhaltens des Kraftfahrzeugs beispielsweise beim starken Beschleunigen auftritt.

Bei einer solchen Konstruktion hat sich jedoch die Drehlagerung der Zwischenwelle am Motorblock als problematisch erwiesen. Bei gängigen Konstruktionen werden Lagervorrichtungen verwendet, die ein Radiallager aufweisen, in deren Innenring die Zwischenwelle drehbar gelagert ist. Der Außenring des Radiallagers ist in einem Lagergehäuse aufgenommen, welches eine Schnittstelle zur starren Befestigung am Motorblock des Kraftfahrzeugs aufweist. Um unerwünschte Vibrationen der Zwischenwelle zu vermeiden, die Quelle für hörbare Geräuschentwicklungen sein können und somit das NVH-Verhalten (Noise, Vibration Harshness) des gesamten Fahrzeugs negativ beeinflussen können, besagt ein erstes gängiges Konstruktionsprinzip, dass die Lagervorrichtung so starr wie möglich ausgeführt werden muss, um das Spektrum der Eigenfrequenzen des sich hier ergebenden schwingungsfähigen Systems (bestehend aus Motorblock einschließlich Getriebe, Zwischenwelle, Antriebswelle und Antriebsrad) in einen solch hohen Frequenzbereich zu verschieben, der für das menschliche Gehör praktisch nicht mehr wahrnehmbar ist. Nachteilig an einer solchen Lagerung ist jedoch, dass Montagefehler des Radiallagers, die in der Praxis häufiger vorkommen, zu einer dramatischen Verkürzung der Lebensdauer des Radiallagers führen und somit nach kurzer Zeit kostenintensive Reparaturarbeiten am Kraftfahrzeug erforderlich machen.

In einem alternativen Ansatz wird daher eine möglichst starr ausgebildete Lagervorrichtung, welche ebenfalls ein Radiallager und ein Lagergehäuse aufweisst, so weitergebildet, dass der Außenring des Radiallager im Lagergehäuse eine Taumelbewegung um zwei zueinander senkrechte Achsen, die ihrerseits senkrecht zur Drehachse der Zwischenwelle orientiert sind, ausführen kann. Diese Konstruktion erzielt zwar verbesserte Ergebnisse hinsichtlich der Lebensdauer der in der Lagervorrichtung verbauten Radiallager, ist aber aufgrund der taumelfähigen Lagerung des Radiallagers im Lagergehäuse mit einem deutlich erhöhten Bearbeitungsaufwand verbunden und weist daher Kostennachteile auf.

In der US 2004/0011584 A1 wird vorgeschlagen, die Lagereigenschaften und damit auch die akustischen Eigenschaften einer gattungsgemäßen Lagervorrichtung zu verbessern, indem die Lagereinheit eine erhöhtes Spiel radial zur Zwischenwelle aufweist.

In einem weiteren alternativen Ansatz wird die Lagervorrichtung, die das Radiallager für die Zwischenwelle aufnimmt, unter Zwischenfügung von gummielastischen Lagerelementen schwingungsentkoppelt am Motorblock befestigt. Eine solche Konstruktion ist beispielsweise aus der US 3,003,831 A bekannt.

Ein weiterer, alternativer Lösungsansatz, der z.B. aus der GB 2 136 373 A oder aus der DE 34 46 518 A1 bekannt ist, besteht darin, die Zwischenwelle schwingungsentkoppelt am Motorblock des Kfz zu lagern. Hierzu wird im Stand der Technik vorgeschlagen, ein Radiallager, dessen Innenring die Zwischenwelle aufnimmt, in einem Lagergehäuse anzuordnen, welches starr mit dem Motorblock des Kraftfahrzeugs verbunden ist. Eine Schwingungsentkopplung zwischen Zwischenwelle und Motorblock wird erzielt, indem der Außenring des verwendeten Radiallagers in einen Gummiring einvulkanisiert wird, der dann seinerseits form- oder kraftschlüssig im Lagergehäuse festgelegt wird. Dieser konstruktive Ansatz erzielt zwar eine vorteilhafte akustische Wirkung, ist aber einerseits mit Kostennachteilen verbunden, da das Einvulkanisieren des Außenrings des Radiallagers in einen gummielastischen Werkstoff mit ausreichender Temperatur und Ölbeständigkeit mit hohen Kosten verbunden ist, andererseits hat es sich als schwierig herausgestellt, eine über die gesamte Lebensdauer eines Kraftfahrzeugs beständige Verbindung des Außenring des Radiallagers anvulkanisierten Gummirings sicherzustellen.

Aufgabe der vorliegenden Erfindung ist es daher, eine Lagervorrichtung zur schwingungsentkoppelten Drehlagerung einer Zwischenwelle am Motorblock eines Kfz anzugeben, die die vorgenannten Nachteile vermeidet. Aufgabe der vorliegenden Erfindung ist es weiterhin, ein Verfahren zur schwingungsentkoppelten Drehlagerung einer Zwischenwelle am Motorblock eines Kfz anzugeben, welches Vorteile gegenüber den aus dem Stand der Technik vorbekannten Verfahren aufweist.

Gelöst wird diese Aufgabe durch eine Lagervorrichtung mit den Merkmalen des Anspruchs 1 sowie durch ein Verfahren mit den Merkmalen des Anspruchs 14.

Eine erfindungsgemäße Lagervorrichtung zur schwingungsentkoppelten Drehlagerung einer Zwischenwelle am Motorblock eines Kfz oder an einem anderen Bauteil des Kfz weist ein Radiallager auf, welches einen Innenring und einen Außenring aufweist, wobei die zu lagernde Zwischenwelle vom Innenring des Radiallagers aufgenommen wird. Weiterhin weist die Lagervorrichtung ein Lagergehäuse auf, welches dazu vorgesehen ist, direkt oder indirekt am Motorblock des Kfz oder an einem anderen Bauteil des Kfz wie dem Getriebegehäuse befestigt zu werden. Weiterhin ist das Lagergehäuse dazu vorgesehen, das Radiallager drehfest in sich aufzunehmen. Schließlich bildet das Lagergehäuse eine mechanische Schnittstelle zur Befestigung des Lagergehäuses am Motorblock des Kfz oder an einem anderen Bauteil des Kfz aus. Dabei kann diese Schnittstelle so ausgebildet sein, dass das Lagergehäuse unmittelbar, d. h. ohne Zwischenschaltung weiterer mechanischer Elemente, am Motorblock des Kfz befestigt werden kann, oder indirekt, d. h. unter Zwischenschaltung weiterer mechanischer Elemente wie beispielsweise eines Lagergehäusehalters, wie er im Rahmen eines nachfolgenden Ausführungsbeispiels näher beschrieben wird, befestigt werden kann.

Erfindungsgemäß weist nun die Lagervorrichtung zumindest ein z.B. gummielastisches Dämpfungselement auf, welches dazu vorgesehen ist, bei einer Montage des Lagergehäuses am Motorblock des Kfz schwingungsdämpfend zwischen dem Lagergehäuse und dem Motorblock angeordnet zu werden.

In dem nun die aus dem Stand der Technik bekannte gummielastische Beschichtung des Außenringes des Radiallagers ersetzt wird durch ein gummielastisches Dämpfungselement, welches nicht zwischen dem Außenring des Radiallagers und dem Lagergehäuse angeordnet wird, sondern vielmehr zwischen dem Lagergehäuse und dem Motorblock oder einem anderen Teil des Kfz, an dem das Lagergehäuse der Lagervorrichtung festgelegt wird, kann das gummielastische Dämpfungselement auf einfachste Weise ausgestaltet werden. Einerseits ist die Formgebung des gummielastischen Dämpfungselements weitgehend frei wählbar, andererseits muss das gummielastische Dämpfungselement nicht unverlierbar und dauerstabil an weitere Elemente der Lagervorrichtung anvulkanisiert werden. Hierdurch können deutliche Kostenvorteile gegenüber der aus dem Stand der Technik vorbekannten gummielastischen Lagerung des Radiallagers im Lagergehäuse der Lagervorrichtung realisiert werden.

Aus schwingungstechnischer Sicht ergeben sich besondere Vorteile, wenn bei einer Montage des Lagergehäuses am Motorblock des Kfz oder an einem weiteren Teil des Kfz das Dämpfungselement vollständig in den Kraftfluss zwischen Lagergehäuse und Motorblock geschaltet ist. Insbesondere ist dies verwirklicht, wenn eine Abstützung des Lagergehäuses am Motorblock über andere mechanische Bauteile als das Dämpfungselement vollständig vermieden wird. Im Rahmen der Ausführungsbeispiele wird hier auf verschiedene Ausgestaltungen von Dämpfungselementen eingegangen, bei denen der gesamte Kraftfluss zwischen Lagergehäuse und Motorblock über das Dämpfungselement verläuft.

In einer ersten bevorzugten Ausgestaltung der erfindungsgemäßen Lagervorrichtung weist das Lagergehäuse zumindest eine erste Durchgangsbohrung auf, die dazu vorgesehen ist, bei einer Montage des Lagergehäuses am Motorblock einen Montagebolzen, beispielsweise eine Maschinenschraube mit Sechskant- oder Inbuskopf, zur Festlegung des Lagergehäuses am Motorblock in sich aufzunehmen. Das erfindungsgemäß vorzusehende Dämpfungselement wird dann vorteilhaft in der ersten Durchgangsbohrung im Lagergehäuse angeordnet. Insbesondere kann das Dämpfungselement selbst eine zweite Durchgangsbohrung aufweisen, die ihrerseits zur Aufnahme des Montagebolzens bei einer Montage des Lagergehäuses am Motorblock vorgesehen ist. In einer besonders bevorzugten Ausgestaltung ist daher das Dämpfungselement in der ersten Durchgangsbohrung des Lagergehäuses angeordnet und bildet seinerseits eine koaxial mit der ersten Durchgangsbohrung im Lagergehäuse verlaufende zweite Durchgangsbohrung aus, in der bei einer Montage des Lagergehäuses am Motorblock der Montagebolzen aufgenommen wird.

Ein besonders einfacher Aufbau der erfindungsgemäßen Lagervorrichtung ergibt sich, wenn der Außenring des Radiallagers kraftschlüssig im Lagergehäuse festgelegt ist. Beispielsweise kann der Außenring des Radiallagers eine zylindrische Außenumfangsfläche aufweisen, die in eine zylindrische Ausnehmung im Lagergehäuse eingepresst ist. Zur Sicherung des Außenringes des Radiallagers im Lagergehäuse kann zusätzlich ein Sicherungselement vorgesehen werden, welches den Außenring in Axialrichtung im Lagergehäuse festlegt.

Das erfindungsgemäße Lagergehäuse kann vorteilhaft mittels Gießverfahren aus metallischen Werkstoffen hergestellt werden, wobei als Werkstoffe insbesondere Stahl und Aluminium Verwendung finden können. Wird das Lagergehäuse im Feinguss hergestellt, kann unter Umständen jeder nachfolgende formgebende Bearbeitungsschritt eingespart werden.

In einer weiteren bevorzugten Ausgestaltung erfasst die erfindungsgemäße Lagervorrichtung weiterhin einen Lagergehäusehalter, der seinerseits eine erste mechanische Schnittstelle zur Befestigung des Lagergehäusehalters am Motorblock des Kfz oder an einem sonstigen Bauteil des Kfz ausbildet. Weiterhin bildet der Lagergehäusehalter eine zweite mechanische Schnittstelle zur Befestigung des Lagergehäuses am Lagergehäusehalter aus. Das erfindungsgemäß vorzusehende zumindest eine Dämpfungselement ist in dieser Ausgestaltung dazu vorgesehen, bei einer Montage des Lagergehäuses am Motorblock oder an einem anderen Bauteil des Kfz schwingungsdämpfend zwischen dem Lagergehäuse und dem Lagergehäusehalter angeordnet zu werden. In einer weniger vorteilhaften aber dennoch technisch möglichen Ausgestaltung der erfindungsgemäßen Lagervorrichtung, die neben einem Lagergehäuse auch einen Lagergehäusehalter umfasst, ist das zumindest eine Dämpfungselement dazu vorgesehen, bei einer Montage des Lagergehäuses am Motorblock schwingungsdämpfend zwischen dem Lagergehäusehalter und dem Motorblock angeordnet zu werden.

Die als bevorzugt angesehene Anordnung des zumindest einen Dämpfungselements zwischen dem Lagergehäuse und dem Lagergehäusehalter weist insbesondere den Vorteil auf, dass durch Zwischenschaltung eines Lagergehäusehalters zwischen das Lagergehäuse und den Motorblock des Kfz eine gewisse thermische Entkopplung des Lagergehäuses vom Motorblock erzielt werden kann, wodurch der Wärmeeintrag in das gummielastische Dämpfungselement aus dem Motorblock deutlich verringert werden kann. Diese Ausgestaltung weist daher weitere Vorteile in Bezug auf die Standfestigkeit des gummielastischen Dämpfungselements auf.

In einer weiteren bevorzugten Ausgestaltung der erfindungsgemäßen Lagervorrichtung ist das Lagergehäuse zweiteilig ausgebildet. Der Außenring des Radiallagers kann dann formschlüssig im Lagergehäuse festgelegt werden. Diese Ausgestaltung des Lagergehäuses weist einerseits den Vorteil auf, dass geringere Fertigungstoleranzen erforderlich sind als bei der Ausgestaltung des Lagergehäuses, bei der der Außenring des Radiallagers mittels Presspassung im Lagergehäuse festgelegt wird. Hierdurch können Kostenvorteil realisiert werden. Darüber hinaus können sich Vorteile in Bezug auf die Montierbarkeit der Zwischenwelle bei der Fertigung des Kfz ergeben, da nach Einführen der Verbindungswelle in den Innenring des Radia llagers das Radiallager nicht mehr in Drehrichtung der Zwischenwelle durch eine Durchgangsbohrung im Lagergehäuse hindurchgeführt werden muss, welches aufgrund von beengten Platzverhältnissen unter einem Kfz mit Schwierigkeiten verbunden sein kann. Vielmehr kann die Verbindungswelle in einer zu ihrer Drehrichtung im Wesentlichen senkrechten Montagerichtung an das Getriebe des Kfz und dessen Motorblock herangeführt werden, und das Radiallager dann durch Überwerfen eines Sicherungsbügels über den Außenring des Radia llagers an demjenigen Teil des Lagergehäuses, welcher bereits fest mit dem Motorblock des Kfz verbunden ist, gesichert werden.

In einer weiteren bevorzugten Ausgestaltung der erfindungsgemäßen Lagervonichtung sind das Lagergehäuse sowie der Außenring des Radiallagers so ausgestaltet, dass das im Lagergehäuse festgele g-te Radiallager eine Taumelbewegung um eine Achse, bevorzugt zwei Achsen, ausführen kann. Diese zwei Achsen können dabei insbesondere senkrecht zur Drehachse der Verbindungswelle orientiert sein. Diese Ausgestaltung der erfindungsgemäßen Lagervorrichtung erlaubt es, die ohnehin recht gute Winkeltoleranz der erfindungsgemäßen Lagervorrichtung nochmals zu verbessern, wodurch die Standfestigkeit des in der Lagervorrichtung vorgesehenen Radiallagers nochmals erhöht werden kann.

Es hat sich als vorteilhaft herausgestellt, wenn das erfindungsgemäße Dämpfungselement eine Härte aufweist, die im Intervall zwischen 10 und 100 Shore A liegt. Bevorzugt liegt die Härte im Intervall zwischen 20 und 60 Shore A. Die für ein gegebenes Kfz auszuwählende Härte des erfindungsgemäßen Dämpfungselements hängt dabei insbesondere von den Gegebenheiten des schwingungsfähigen Systems bestehend aus Motorblock, Getriebe, Verbindungswelle samt Lagervorrichtung, Antriebswelle, Radaufhängung sowie Antriebsrad ab. Ein möglicher schwingungstechnischer Ansatz, welcher das NVH-Verhalten des vorgenannten schwingungsfähigen Systems positiv beeinflusst, besteht darin, die erste Eigenfrequenz des genannten schwingungsfähigen Systems so zu verschieben, dass sie im Bereich des vom menschlichen Gehörs nicht mehr oder nur noch schwach wahrnehmbaren Infraschalls liegt. Bevorzugt sollte die erste Eigenfrequenz daher unterhalb von 50 Hz liegen, besonders bevorzugt unterhalb von 30 Hz.

Ein alternativer Ansatz, der insbesondere dann verfolgt werden kann, wenn eine entsprechende Verschiebung der ersten Eigenfrequenz des vorgenannten schwingungsfähigen Systems in den genannten Frequenzbereich aufgrund der Gegebenheiten des Kfz nicht möglich ist, besteht darin, die Dämpfungseigenschaften des Dämpfungselements so auszuwählen, dass die sich ergebende maximale Schwingungsamplitude des vorgenannten schwingungsfähigen Systems so klein ist, dass keine hörbaren akustischen Störungen auf die Karosserie des Fahrzeugs übertragen werden, so dass die durch die Vibrationen insbesondere der Zwischenwellle verursachten akustischen Störungen unterhalb der Wahrnehmbarkeitsschwelle der Passagiere des Kfz liegen.

Schließlich ist es auch möglich, die erste Eigenfrequenz des vorgenannten schwingungsfähigen Systems zumindest so weit abzusenken, dass die tiefste Anregungsfrequenz, welche vom laufenden Motor des Kfz verursacht wird und welche in der Regel im Leerlauf des Motors (beispielsweise eine Verbrennungskraftmaschine) auftritt, soweit oberhalb der ersten Eigenfrequenz des schwingungsfähigen Systems liegt, das hier keine relevante Anregung der ersten Eigenfrequenz mehr auftritt. Auch diese Abstimmung der ersten Eigenfrequenz des vorgenannten schwingungsfähigen Systems kann über die Auswahl des gummielastischen Dämpfungselements, insbesondere von dessen Härte, d. h. Federkonstante und von dessen inhärenter Dämpfung beeinflusst werden.

Um eine Standfestigkeit der erfindungsgemäßen Lagervorrichtung über zumindest wesentliche Teile der Lebensdauer eines Kfz sicherzustellen, hat es sich als vorteilhaft herausgestellt, wenn das Dämpfungselement selbst temperaturresistent bis mindestens 160° C ist, bevorzugt aber bis 180° C und darüber. Darüber hinaus sollte das Dämpfungselement eine gute Resistenz gegenüber den in einem Kfz mit Verbrennungskraftmaschine anzutreffenden Verunreinigungen im Motorraumwie Motoröl, Treibstoff für die Verbrennungskraftmaschine, Bremsflüssigkeit etc. aufweisen.

Das erfindungsgemäße Verfahren zur schwingungsentkoppelten Drehlagerung einer Zwischenwelle am Motorblock eines Kfz oder an einem anderen Bauteil eines Kfz umfasst folgende Verfahrensschritte:
a) Bereitstellen einer Lagervorrichtung, die folgendes umfasst:
   I) ein Radiallager mit einem Innenring zur Aufnahme der Zwischenwelle und mit einem Außenring,
   II) ein Lagergehäuse, welches dazu vorgesehen ist, am Motorblock oder einem anderen Bauteil des Kfz befestigt zu werden und das weiterhin dazu vorgesehen ist, das Radiallager drehfest in sich aufzunehmen, wobei das Lagergehäuse eine mechanische Schnittstelle zur Befestigung am Motorblock oder an einem anderen Bauteil des Kfz ausbildet und,
   III) zumindest ein z.B. gummielastisches Dämpfungselement.
b) Im nachfolgenden Verfahrensschritt wird das Lagergehäuse der Lagervorrichtung am Motorblock oder einem anderen Bauteil des Kfz montiert, wobei das zumindest eine Dämpfungselement schwingungsdämpfend zwischen dem Lagergehäuse und dem Motorblock angeordnet wird.

Bezüglich der Anordnung des Dämpfungslementes zwischen dem Lagergehäuse und dem Motorblock wird auf die Ausführungen im Zusammenhang mit der erfindungsgemäßen Lagervorrichtung verwiesen, ebenso wie in Bezug auf weitere vorteilhafte Ausgestaltungen der im Verfahrensschritt a) bereitgestellten Lagervorrichtung.

Eine weitere vorteilhafte Ausgestaltung des erfindungsgemäßen Verfahrens betrifft die Auswahl eines geeigneten gummielastischen Elementes für ein gegebenes Kfz, die vorteilhaft so erfolgt, dass die erste Eigenfrequenz des schwingungsfähigen Systems bestehend aus Motor, Getriebe, Verbindungswelle nebst erfindungsgemäßer Lagervorrichtung, Antriebswelle, Radaufhängung und Antriebsrad im Infraschallbereich liegt. Zumindest aber sollte die erste Eigenfrequenz des vorgenannten schwingungsfähigen Systems deutlich unterhalb der niedrigsten Anregungsfrequenz liegen, die vom Motor des Kfz erzeugt wird, der in der Regel als Verbrennungskraftmaschine ausgestaltet sein wird.

Weitere Vorteile und Merkmale ergeben sich aus den Ausführungsbeispielen, die nachfolgend anhand der Zeichnungen erläutert werden. In dieser zeigen:
- Figur 1:: eine schematische Darstellung des Motorblocks nebst Getriebe des Kfz mit angeschlossenen Antriebswellen sowie einer Verbindungswelle,
- Figur 2a:: einen Schnitt durch eine erste bevorzugte Ausführungsform einer erfindungsgemäßen Lagervorrichtung,
- Figur 2b:: einen orthogonal ausgeführten Schnitt durch die Lagervorrichtung gemäß Figur 2 a,
- Figur 3a:: eine vergrößerte Ansicht eines Schnitts durch eine erste Ausgestaltung eines Dämpfungselements
- Figur 3b:: eine vergrößerte Ansicht eines Schnitts durch eine zweite Ausgestaltung eines Dämpfungselements
- Figur 4a:: eine schematische Darstellung eines zweiten Ausführungsbeispiels einer erfindungsgemäßen Lagervorrichtung in Seitenansicht,
- Figur 4b:: die Ansicht der Figur 4a in vergrößerter Ansicht, und
- Figur 4c:: einen Schnitt durch das Ausführungsbeispiel gemäß der Figuren 4a und 4b.
- Figur 5:: ein drittes Ausführungsbeispiel einer erfindungsgemäßen Lagervorrichtung

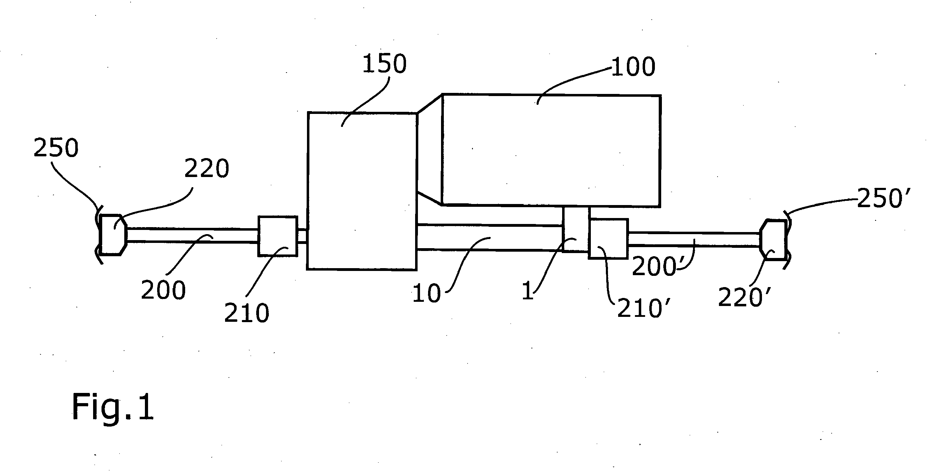

Figur 1 zeigt eine schematische Darstellung der Vorderachse eines frontgetriebenen Fahrzeuges. An den Motorblock 100 schließt sich das Getriebegehäuse 150 an, in dem ein Vorderachsdifferential (nicht dargestellt) angeordnet ist. Linksseitig schließt sich an die linke Abtriebswelle des Differentials eine linksseitige Antriebswelle 200 an, welche mittels eines Verschiebegelenks 210 an das Vorderachsdifferential angeschlossen ist. Am außenseitigen Ende weist die linke Antriebswelle 200 ein Gleichlaufgelenk 220 auf, welches eine drehfeste abwinkelbare Verbindung zum Antriebsrad 250 ausbildet.

Um rechtsseitig eine identisch dimensionierte rechtsseitige Antriebswelle 200' verwenden zu können, muss zwischen die rechtsseitige Antriebswelle 200' und den rechtsseitigen Ausgang des Vorderachsdifferentials eine Zwischenwelle 10 eingefügt werden. Die Zwischenwelle 10 wird beispielsweise mittels einer Splines-Verbindung drehfest mit dem rechtsseitigen Abtrieb des Vorderachsdifferentials verbunden. An ihrem aussenliegenden Ende wird die Zwischenwelle 10 in einer Lagervorrichtung 1 drehbar am Motorblock 100 gelagert und mittels eines rechtsseitigen Verschiebegelenkes 210' drehfest mit der rechtsseitigen Antriebswelle 200' verbunden, deren Aufbau demjenigen der linksseitigen Antriebswelle 200 entspricht. Da die Zwischenwelle 10 im wesentlichen starr mit dem Vorderachsdifferential und dem Motorblock 100 des Kfz verbunden ist, also im Betrieb des Kfz keine Abwinkelbewegungen ausführen muss, kann die Zwischenwelle deutlich großzügiger dimensioniert werden als die Antriebswellen 200, 200', wie im einleitenden Teil bereits ausgeführt wurde. Hierdurch kann sichergestellt werden, dass die Torsionseigenschaften des gekoppelten Systems bestehend aus Zwischenwelle 10 und rechter Antriebswelle 200'im wesentlichen den Torsionseigenschaften der linken Antriebswelle 200 entsprechen, so dass hier keine negative Beeinflussung des Fahrverhaltens des Kfz beispielsweise beim starken Beschleunigen auftritt.

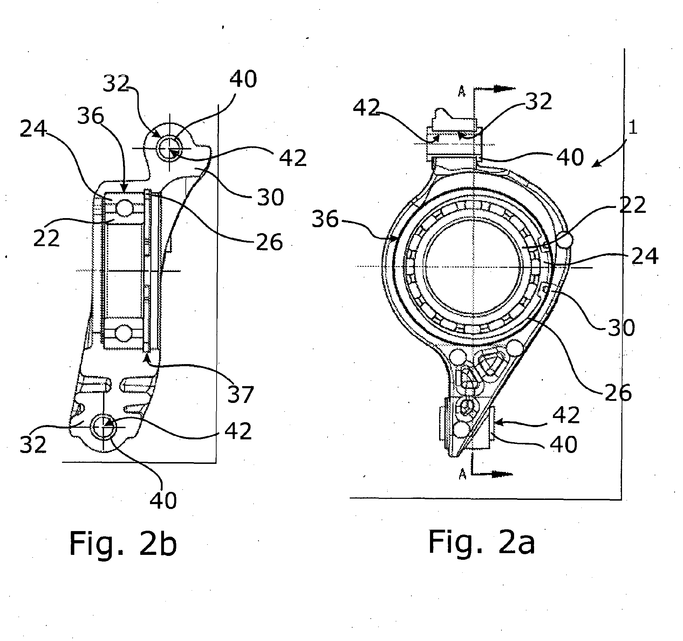

Figur 2 a zeigt nun ein erstes Ausführungsbeispiel einer erfindungsgemäßen Lagervorrichtung 1, mittels welcher die Zwischenwelle 10 schwingungsentkoppelt am Motorblock 100 des Kfz gelagert werden kann. Die Lagervorrichtung 1 umfasst ein einstückig ausgebildetes Lagergehäuse 30, welches beispielsweise aus Stahlguss bestehen kann. Das Lagergehäuse 30 weist eine zylindrische Aufnahmeausnehmung 36 auf, in die der Außenring 24 des Radiallagers 20 eingepresst ist. Der Außeming 24 wird in Axialrichtung gesichert durch ein Sicherungselement 26, welches als Federring ausgebildet ist, das in einer in der Innenumfangsfläche der Aufnahmeausnehmung 36 ausgebildete ringförmige Nut 37 eingreift. Das Radiallager 20 ist dabei als Rillenkugellager ausgebildet, wobei der Innenring 22 des Radiallagers 20 dazu vorgesehen ist, die Zwischenwelle 10 in sich aufzunehmen.

Zur Montage der Lagervorrichtung 1 am Motorblock 100 des Kfz bildet die Lagervorrichtung 1 nun eine Schnittstelle aus, die im gezeigten Ausführungsbeispiel aus zwei ersten Durchgangsbohrungen 32 besteht, die orthogonal zur Drehachse der Zwischenwelle 100 orientiert sind. Diese ersten Durchgangsbohrungen 32 sind dazu vorgesehen, bei einer Montage der Lagervorrichtung 1 Montagebolzen 50 in sich aufzunehmen, mittels derer das Lagergehäuse 30 der Lagervorrichtung 1 am Motorblock 100 festgeschraubt werden kann.

Um die erfindungsgemäß zu realisierende schwingungsentkoppelte Lagerung der Zwischenwelle 10 am Motorblock 100 zu realisieren, sind nun Dämpfungselemente 40 in die ersten Durchgangsbohrungen 32 des Lagergehäuses 30 eingefügt. Diese Dämpfungselemente 40 sind hülsenförmig ausgebildet und bestehen aus einem gummielastischen Werkstoff, dessen Härte bevorzugt im Bereich zwischen 20 und 60 Shore A liegt und der eine Temperaturbeständigkeit von 160° C oder besser aufweist. Die hülsenförmig ausgebildeten Dämpfungselemente 40 bilden ihrerseits eine zweite Durchgangsbohrung 42 aus, die im montierten Zustand koaxial mit den ersten Durchgangsbohrungen 32 im Lagergehäuse 30 ausgerichtet sind. Bei einer Montage der erfindungsgemäßen Lagervorrichtung am Motorblock 100 des Kfz werden nun Montagebolzen 50 durch die zweiten Durchgangsbohrungen 42 hindurchgeführt und mit dem Motorblock 100 verschraubt. Hierbei ist darauf zu achten, dass die Dämpfungselemente 40 keine zu starke Kompression erfahren, so dass ein direkter mechanischer Kontakt zwischen den Montagebolzen 50 und dem Lagergehäuse 30 einerseits und dem Lagergehäuse 30 und dem Motorblock 100 andererseits sicher vermieden wird. In dieser Konfiguration sind dann die Dämpfungselemente 40 vollständig in den Kraftfluss zwischen dem Lagergehäuse 30 und dem Motorblock 100 geschaltet. Da die Montagebolzen 50 kein zu starkes Anzugsmoment erfahren dürfen, kann es technisch sinnvoll sein, die Montagebolzen 50 mit selbstsichernden Eigenschaften auszustatten, sodass sie ab einer gewissen Einschraubtiefe in den Motorblock 100 eine ausreichende Sicherungskraft gegen unbeabsichtigtes Lösen erfahren. Grundsätzlich stehen hier alle aus dem Stand der Technik vorbekannten Möglichkeiten zur Sicherung der Montagebolzen 50 am Motorblock 100 zur Verfugung.

Figur 2b zeigt nochmals das erste Ausführungsbeispiel gemäß Figur 2 a in einem Schnitt längs der Ebene A-A aus Figur 2a, aus der die Anordnung des Radiallagers 20 in der Aufnahmeausnehmung 36 des Lagergehäuses 30 deutlich wird. Auch die Anordnung des Sicherungsringes in der ringförmigen Nut 37 ist deutlich zu erkennen. Weiterhin ist aus Figur 2b die koaxiale Anordnung der ersten und zweiten Durchgangsbohrungen 32, 42 im Lagergehäuse 30 bzw. in den Dämpfungselementen 40, welche in den ersten Durchgangsbohrungen 32 des Lagergehäuses 30 angeordnet sind, zu ersehen.

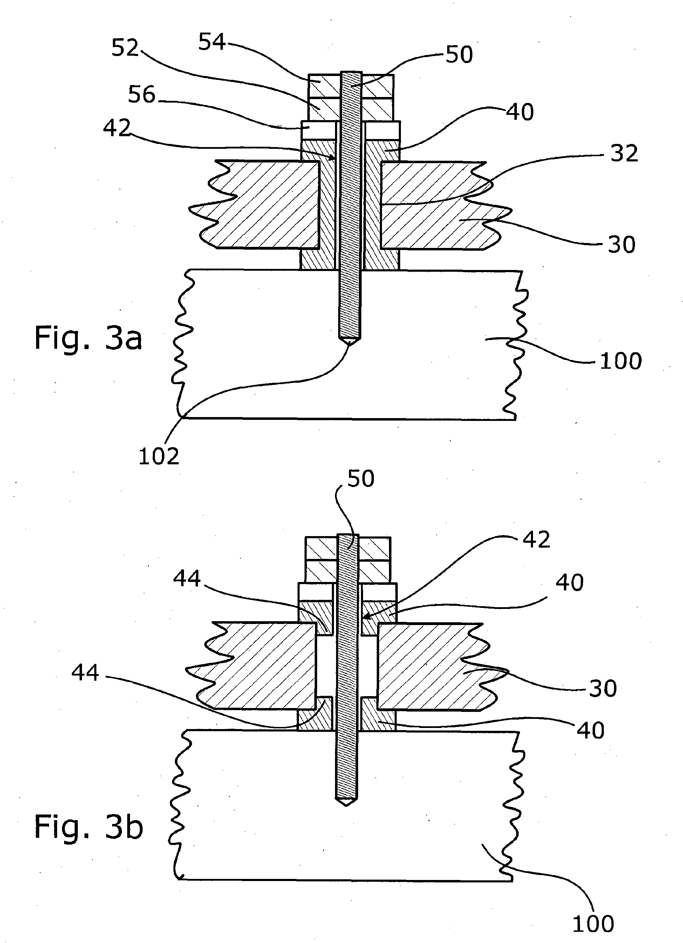

Figur 3 a zeigt nochmals vergrößert einen Schnitt durch eine der ersten Durchgangsbohrungen 32, die im Lagergehäuse 30 der Lagervorrichtung 1 ausgebildet sind. In der Figur 3 a ist die erfindungsgemäße Vorrichtung im Gegensatz zu der Darstellung der Figuren 2 a und 2 b bereits am Motorblock 100 montiert. Hierzu ist in die erste Durchgangsbohrung 32 des Lagergehäuses 30 ein hülsenförmiges Dämpfungselement eingefügt, welches die vorgenannten Eigenschaften aufweist. Im montierten Zustand fällt die Längsachse der zweiten Durchgangsbohrung 42, welche im hülsenförmigen Dämpfungselement 40 ausgeführt ist, mit der Längsachse der ersten Durchgangsbohrung 32 im Lagergehäuse 30 zusammen, wie aus Figur 3 a ersichtlich ist. Im Motorblock 100 ist eine Gewindebohrung 102 vorgesehen, in die ein Montagebolzen 50 eingeschraubt ist, der im gezeigten Ausführungsbeispiel als Gewindestange ausgeführt ist. Die Gewindestange wird dabei auf geeignete Weise in der Gewindebohrung 102 im Motorblock gegen unbeabsichtigtes Lösen gesichert. Die Gewindestange 50 wird nun durch die zweite Durchgangsbohrung 43 im Dämpfungselement 40 hindurchgeführt. Oberseitig wird eine Unterlegscheibe 56 aufgesetzt und das Gehäuse 30 wird mittels einer Mutter 52 am Motorblock 100 festgelegt. Durch Begrenzung des Anzugmoments der Mutter 30 kann eine zu starke Kompression des Dämpfungselements 40 sicher vermieden werden. Die Mutter 52 ihrerseits wird gegen unbeabsichtigtes Lösen durch eine gegen die Mutter 52 aufgeschraubte Kontermutter 54. gesichert.

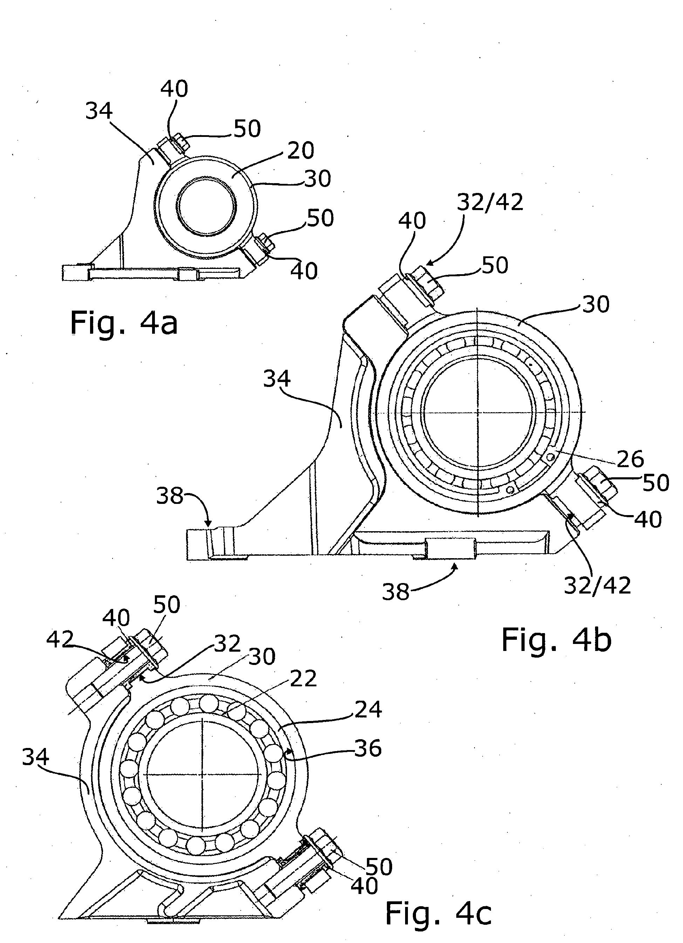

Figur 3b zeigt eine alternative Ausgestaltung des Dämpfungselementes 40, welche beispielsweise im Zusammenhang mit dem ersten Ausführungsbeispiel der erfindungsgemäßen Lagervorrichtung 1 gemäß der Figuren 2 a und 2 b Verwendung finden kann. Es kann aber auch im Zusammenhang mit dem zweiten Ausführungsbeispiel gemäß der Figuren 4a bis c Verwendung finden. In Figur 3b sind anstelle eines hülsenförmigen Dämpfungselementes 40 im Bereich einer Durchgangsbohrung 32 zwei separat ausgebildete ringförmige Dämpfungselemente 40 angeordnet, deren Symmetrieachse wiederum mit der Längsachse der ersten Durchgangsbohrung 32 zusammenfällt. Um sicherzustellen, dass bei der Montage des Lagergehäuses 30 am Motorblock 100 die separat ausgebildeten ringförmigen Dämpfungselemente ihre vorgesehene Orientierung beibehalten, bilden die ringförmigen Dämpfungselemente 40 jeweils einen ringförmigen Zentriervorsprung 44 aus, der in die erste Durchgangsbohrung 32 im Lagergehäuse 30 eingreift. Die separat ausgebildeten Dämpfungselemente 40 können dabei aus demselben Material bestehen wie die hülsenförmigen Dämpfungselemente gemäß Figur 3 a.

Figur 4 a zeigt in einer vereinfachten Darstellung ein zweites Ausführungsbeispiel einer erfindungsgemäßen Lagervorrichtung, die sich vom ersten Ausführungsbeispiel im wesentlichen dadurch unterscheidet, dass das Lagergehäuse 30 der Vorrichtung 1 nicht unmittelbar am Motorblock 100 festgelegt wird. Vielmehr ist ein Lagergehäusehalter 34 vorgesehen, der starr mit dem Motorblock 100 verbunden wird. Das Lagergehäuse 30 wird dann auf die bereits aus dem ersten Ausführungsbeispiel bekannte Weise schwingungsentkoppelt mit dem Lagergehäusehalter 34 verbunden. Da an die Fertigungspräzision des Lagergehäusehalters 34 keine erhöhten Anforderungen zu stellen sind, kann es sich beim Lagergehäusehalter 34 um ein einfaches metallisches Gussteil handeln. In das Lagergehäuse 30 hingegen ist wie im ersten Ausführungsbeispiel der Außenring 24 des Radiallagers 20 eingepresst, wozu das Lagergehäuse 30 eine entsprechend genau bearbeitete Aufnahmeausnehmung 36 aufweisen muss. Aus diesem Grunde kann das Lagergehäuse 30 beispielsweise im Feinguss hergestellt sein. Im zweiten Ausführungsbeispiel wird das Lagergehäuse 30 mittels Montagebolzen 50 am Lagergehäusehalter 34 mechanisch festgelegt, wobei hier wiederum hülsenförmige Dämpfungselemente 40, die denen des ersten Ausführungsbeispiels entsprechen können, vollständig in den Kraftfluss zwischen dem Lagergehäuse 30 und dem Lagergehäusehalter 34 geschaltet sind.

Figur 4b zeigt den Aufbau der Lagervorrichtung 1 gemäß des zweiten Ausführungsbeispiels im Detail. Figur 4b kann unter anderem entnommen werden, dass der Lagergehäusehalter 34 seinerseits dritte Durchgangsbohrungen 38 ausbildet, die dazu vorgesehen sind, bei einer Montage des Lagergehäusehalters 34 am Motorblock 100 weitere Montagebolzen 50 in sich aufzunehmen. In einer alterntiven Ausgestaltung der Lagervorrichtung 1 gemäß der Figuren 4a bis 4c sind auch in die dritten Durchgangsbohrungen 38 des Lagergehäusehalters 34 Dämpfungselemente 40 des bereits bekannten Typs eingefügt, sodass sich hier eine schwingungsentkoppelte Lagerung des Lagergehäusehalters 34 am Motorblock 100 ergibt. Unter Umständen kann dann auf eine schwingungsentkoppelte Lagerung des Lagergehäuses 30 am Lagergehäusehalter 34 vollständig verzichtet werden.

Es kann aber auch Anwendungsbeispiele geben, in denen eine weitere schwingungsentkoppelte Lagerung des Lagergehäuses 30 am Lagergehäusehalter 34 eine vorteilhafte Wirkung zeigt in Bezug auf das NVH-Verhalten der Zwischenwelle 10.

Figur 4c zeigt nochmals einen Schnitt durch die Lagervorrichtung 1 gemäß des zweiten Ausführungsbeispiels, wobei der Schnitt durch die Papierebene der Ansicht gemäß Figur 4b ausgeführt ist.

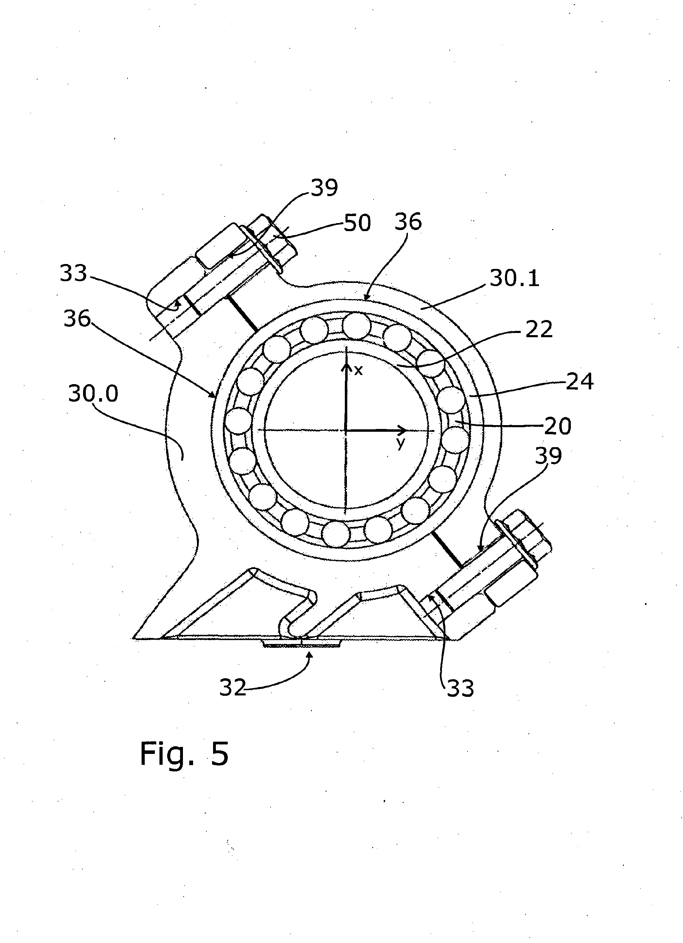

Figur 5 zeigt schließlich ein drittes Ausführungsbeispiel einer erfindungsgemäßen Lagervorrichtung 1, welches im Wesentlichen dem ersten Ausführungsbeispiel gemäß den Figuren 2, 2 a und 2 b entspricht. Zentraler Unterschied ist die zweigeteilte Ausführung des Lagergehäuses 30, wobei das Lagergehäuse 30 einen feststehenden Teil 30.0 umfasst, welcher eine Schnittstelle zur schwingungsentkoppelten Lagerung am Motorblock 100 des Kfz aufweist. Hierzu bildet der feststehende Gehäuseteil 30.0 eine erste Durchgangsbohrung 32 aus, in die auf die aus den vorstehenden Ausführungsbeispielen vorbekannte Weise Dämpfungselemente 40 eingefügt werden können, bevor der feststehende Gehäuseteil 30.0 mittels eines Montagebolzens 50, der durch die erste Durchgangsbohrung 32 hindurchgeführt wird, am Motorblock 100 gesichert wird.

Das zweiteilige Lagergehäuse 30 bildet auch in diesem Ausführungsbeispiel eine Aufnahmeausnehmung 36 für den Außenring 24 des Radiallagers 20 aus, wobei aufgrund der zweiteiligen Ausführung des Lagergehäuses 30 der Außenring 24 beispielsweise auch mittels Formschluss im Lagergehäuse 30 festgelegt werden kann. Insbesondere ist diese zweigeteilte Ausführung des Lagergehäuses 30 dazu geeignet, den Außenring 24 des Radiallagers 20 so in sich aufzunehmen, dass der Außenring 24 zwar drehfest mit dem Lagergehäuse 30 verbunden ist, aber dennoch eine Taumelbewegung, in der Ebene der Figur 5 ausführen kann. Dies bedeutet, dass das Radiallager 20 insgesamt eine Drehbewegung um die Achsen X und Y in Figur 5 ausführen kann, wobei der Winkelbereich der Drehbewegung auf wenige Grad oder geringer beschränkt sein kann. Das Radiallager 20 wird im Lagergehäuse 30 festgelegt, in dem es in den feststehenden Gehäuseteil 30.0 eingefügt wird und nachfolgend mittels des aufgesetzten fliegenden Gehäuseteils 30.1 festgelegt wird. Das fliegende Gehäuseteil 30.1 wird mittels Montagebolzen 50 am feststehenden Gehäuseteil 30.0 fixiert, wozu das fliegende Gehäuseteil 30.1 vierte Durchgangsbohrungen 39 zur Aufnahme der Montagebolzen 50 ausbildet, und im feststehenden Gehäuseteil 30.0 Gewindebohrungen 33 zur Verschraubung der Montagebolzen 50 ausgebildet sind.

## Patentansprüche

1. Lagervorrichtung (1) zur schwingungsentkoppelten Drehlagerung einer Zwischenwelle (10) am Motorblock (100) eines Kfz, mit den folgenden Merkmalen:
a. einem Radiallager (20) mit
i. einem Innenring (22) zur Aufnahme der Zwischenwelle (10), und
ii. einem Außenring (24).
b. einem Lagergehäuse (30), welches zweiteilig ausgebildet ist und in dem der Außenring (24) des Radiallagers (20) formschlüssig festgelegt ist,
i. dazu vorgesehen ist,
1. am Motorblock (100) des Kfz befestigt zu werden, und
2. das Radiallager (20) drehfest in sich aufzunehmen, und
ii. eine mechanische Schnittstelle zur Befestigung des Lagergehäuses (30) am Motorblock (100) des Kfz ausbildet,
wobei
c. die Lagervorrichtung (1) weiterhin zumindest ein gummielastisches Dämpfungselement (40)umfasst, das dazu vorgesehen ist, bei einer Montage des Lagergehäuses (30) am Motorblock (100) schwingungsdämpfend zwischen dem Lagergehäuse (30) und dem Motorblock (100) angeordnet zu werden,
**dadurch gekennzeichnet, dass**
d. das im Lagergehäuse (30) festgelegte Radiallager (20) eine Taumelbewegung um zwei Achsen x,y ausführen kann.

2. Lagervorrichtung (1) gemäß Anspruch 1, **dadurch gekennzeichnet, dass** bei einer Montage des Lagergehäuses (30) am Motorblock (100) das Dämpfungselement (40) in dem Kraftfluss zwischen Lagergehäuse (30) und Motorblock (100) geschaltet ist.

3. Lagervorrichtung (1) gemäß Anspruch 2, **dadurch gekennzeichnet, dass**
a. das Lagergehäuse (30) zumindest eine erste Durchgangsbohrung (32) aufweist, die dazu vorgesehen ist, bei einer Montage des Lagergehäuses (30) am Motorblock (100) einen Montagebolzen (50) zur Festlegung des Lagergehäuses (30) am Motorblock (100) in sich aufzunehmen, und
b. das Dämpfungselement (40) in der ersten Durchgangsbohrung (32) angeordnet ist.

4. Lagervorrichtung (1) gemäß Anspruch 1, **dadurch gekennzeichnet, dass** das Dämpfungselement (40) eine zweite Durchgangsbohrung (42) zur Aufnahme des Montagebolzens (50) aufweist.

5. Lagervorrichtung (1) gemäß Anspruch 1, **dadurch gekennzeichnet, dass** der Außenring (24) des Radiallagers (20) kraftschlüssig im Lagergehäuse (30) festgelegt ist.

6. Lagervorrichtung (1) gemäß Anspruch 1, **dadurch gekennzeichnet, dass** der Außenring (24) des Radiallagers (20) mittels eines Sicherungselements (26) im Lagergehäuse (30) festgelegt ist.

7. Lagervorrichtung (1) gemäß Anspruch 1, **dadurch gekennzeichnet, dass** das Lagergehäuse (30) mittels Gießverfahren aus einem metallischen Werkstoff hergestellt ist.

8. Lagervorrichtung (1) gemäß Anspruch 1, **dadurch gekennzeichnet, dass** die Vorrichtung (1) weiterhin einen Lagergehäusehalter (34) umfasst, der
a. eine erste mechanische Schnittstelle zur Befestigung des Lagergehäusehalters (34) am Motorblock (100) des Kfz ausbildet, und
b. eine zweite mechanische Schnittstelle zur Befestigung des Lagergehäuses (30) am Lagergehäusehalter (34) aufweist,
wobei
c. das zumindest eine Dämpfungselement (40) dazu vorgesehen ist, bei einer Montage des Lagergehäuses (30) am Motorblock (100) schwingungsdämpfend zwischen dem Lagergehäuse (30) und dem Lagergehäusehalter (34) angeordnet zu werden.

9. Lagervorrichtung (1) gemäß Anspruch 1, **dadurch gekennzeichnet, dass** das zumindest eine Dämpfungselement (40) eine Härte aufweist, die im Intervall zwischen 10 und 100 Shore A liegt, bevorzugt im Intervall zwischen 20 und 60 Shore A.

10. Lagervorrichtung (1) gemäß Anspruch 1, **dadurch gekennzeichnet, dass** die erste Eigenfrequenz des schwingungsfähigen Systems bestehend aus Zwischenwelle (10), Antriebswelle (200), Antriebsrad (250) und Lagervorrichtung (1) unterhalb von 50 Hertz liegt, bevorzugt unterhalb von 30 Hertz.

11. Lagervorrichtung (1) gemäß Anspruch 1, **dadurch gekennzeichnet, dass** das zumindest ein Dämpfungselement (40) temperaturresistent bis 160 °C ist, bevorzugt bis 180 °C.

12. Verfahren zur schwingungsentkoppelten Drehlagerung einer Zwischenwelle (10) am Motorblock (100) eines Kfz, mit den folgenden Verfahrensschritten:
a. Bereitstellen einer Lagervorrichtung (1), die folgendes umfasst:
i. ein Radiallager (20) mit einem Innenring (22) zur Aufnahme der Zwischenwelle (10), und einem Außenring (24),
ii. ein Lagergehäuse (30), welches
1. zweiteilig ausgebildet und dazu vorgesehen ist, am Motorblock (100) des Kfz befestigt zu werden, und das Radiallager (20) formschlüssig und drehfest in sich aufzunehmen, dergestalt dass das im Lagergehäuse (30) festgelegte Radiallager (20) eine Taumelbewegung um zwei Achsen x,y ausführen kann, und
2. das eine mechanische Schnittstelle zur Befestigung des Lagergehäuses (30) am Motorblock (100) des Kfz ausbildet, und
iii. zumindest ein gummielastisches Dämpfungselement,
b. Montage des Lagergehäuses (30) am Motorblock (100) des Kfz, wobei das zumindest eine gummielastische Dämpfungselement (40) schwingungsdämpfend zwischen dem Lagergehäuse (30) und dem Motorblock (100) angeordnet wird.

13. Verfahren gemäß Anspruch 12, **dadurch gekennzeichnet, dass** das zumindest eine gummielastische Dämpfungselement (40) so ausgewählt wird, dass die erste Eigenfrequenz des schwingungsfähigen Systems bestehend aus Zwischenwelle (10), Antriebswelle (200), Antriebsrad (250) und Lagervorrichtung (1)unterhalb von 50 Hertz liegt, bevorzugt unterhalb von 30 Hertz.

## Claims

1. A bearing device (1) for the vibrationally decoupled rotary mounting of an intermediate shaft (10) on the engine block (100) of a motor vehicle, comprising the following features:
a. a radial bearing (20) comprising
i. an inner ring (22) for accommodating the intermediate shaft (10), and
ii. an outer ring (24),
b. a bearing housing (30) which is formed in two parts and in which the outer ring (24) of the radial bearing (20) is fixed in a positive fit,
i. which is provided
1. for attachment to the engine block (100) of the motor vehicle, and
2. for accommodating the radial bearing (20) in a non-rotatable manner, and
ii. which forms a mechanical interface for attaching the bearing housing (30) to the engine block (100) of the motor vehicle,
wherein
c. the bearing device (1) further comprises at least one rubber-elastic damper member (40) provided to be disposed in a vibration-damping way between the bearing housing (30) and the engine block (100) when the bearing housing (30) is mounted on the engine block (100),
**characterized in that**
d. the radial bearing (20) fixed in the bearing housing (30) is able to execute a wobbling movement about two axes x,y.

2. The bearing device (1) according to claim 1, **characterized in that** the damper member (40) is incorporated into the power train between the bearing housing (30) and the engine block (100) when the bearing housing (30) is mounted on the engine block (100).

3. The bearing device (1) according to claim 2, **characterized in that**
a. the bearing device (30) comprises at least one first through bore (32) provided to accommodate an assembly bolt (50) for fixing the bearing housing (30) on the engine block (100) when the bearing housing (30) is mounted on the engine block (100), and
b. the damper member (40) is disposed in the first through bore (32).

4. The bearing device (1) according to claim 1, **characterized in that** the damper member (40) comprises a second through bore (42) for accommodating the assembly bolt (50).

5. The bearing device (1) according to claim 1, **characterized in that** the outer ring (24) of the radial bearing (20) is fixed in a force fit in the bearing housing (30).

6. The bearing device (1) according to claim 1, **characterized in that** the outer ring (24) of the radial bearing (20) is fixed in the bearing housing (30) by means of a securing element (26).

7. The bearing device (1) according to claim 1, **characterized in that** the bearing housing (30) is manufactured from a metallic material by means of casting processes.

8. The bearing device (1) according to claim 1, **characterized in that** the device (1) further comprises a bearing housing bracket (34), which
a. forms a first mechanical interface for attaching the bearing housing bracket (34) to the engine block (100) of the motor vehicle, and
b. comprises a second mechanical interface for attaching the bearing housing (30) to the bearing housing bracket (34),
wherein
c. the at least one damper member (40) is provided to be disposed in a vibration-damping way between the bearing housing (30) and the bearing housing bracket (34) when the bearing housing (30) is mounted on the engine block (100).

9. The bearing device (1) according to claim 1, **characterized in that** the at least one damper member (40) has a hardness which lies in the interval between 10 and 100 Shore A, preferably in the interval between 20 and 60 Shore A.

10. The bearing device (1) according to claim 1, **characterized in that** the first natural frequency of the vibratory system consisting of intermediate shaft (10), drive shaft (200), drive wheel (250) and bearing device (1) lies below 50 Hertz, preferably below 30 Hertz.

11. The bearing device (1) according to claim 1, **characterized in that** at least one damper member (40) is temperature-resistant to 160°C, preferably to 180°C.

12. A method for the vibrationally decoupled rotary mounting of an intermediate shaft (10) on the engine block (100) of a motor vehicle, comprising the following process steps:
a. providing a bearing device (1), which comprises the following:
i. a radial bearing (20) with an inner ring (22) for accommodating the intermediate shaft (10), and with an outer ring (24),
ii. a bearing housing (30), which is
1. formed in two parts and is provided for attachment to the engine block (100) of the motor vehicle and for accommodating the radial bearing (20) positively and in a non-rotatable manner in such a way that the radial bearing (20) fixed in the bearing housing (30) is able to execute a wobbling movement about two axes x,y, and
2. which forms a mechanical interface for the attachment of the bearing housing (30) to the engine block (100) of the motor vehicle, and
iii. at least one rubber-elastic damper member,
b. mounting the bearing housing (30) on the engine block (100) of the motor vehicle, wherein the at least one rubber-elastic damper member (40) is disposed in a vibration-damping way between the bearing housing (30) and the engine block (100).

13. The method according to claim 12, **characterized in that** the at least one rubber-elastic damper member (40) is selected such that the first natural frequency of the vibratory system consisting of intermediate shaft (10), drive shaft (200), drive wheel (250) and bearing device (1) lies below 50 Hertz, preferably below 30 Hertz.

## Revendications

1. Dispositif formant palier (1) pour supporter en rotation, d'une manière découplée en vibration, un arbre intermédiaire (10) sur le bloc-moteur (100) d'un véhicule automobile, présentant les caractéristiques suivantes:
a. un palier radial (20) comprenant
i. une bague intérieure (22) destinée à recevoir l'arbre intermédiaire (10), et
ii. une bague extérieure (24),
b. un boîtier de palier (30) qui est réalisé en deux parties et dans lequel la bague extérieure (24) du palier radial (20) est immobilisée à engagement positif,
i. est prévu pour
1. être fixé sur le bloc-moteur (100) du véhicule automobile et
2. recevoir le palier radial (20) dans son intérieur de manière solidaire en rotation, et
ii. forme une interface mécanique pour fixer le boîtier de palier (30) sur le bloc-moteur (100) du véhicule automobile,
dans lequel
c. le dispositif formant palier (1) comprend en outre au moins un élément amortisseur (40) élastique comme le caoutchouc qui est prévu pour être disposé à amortissement de vibrations entre ledit boîtier de palier (30) et le bloc-moteur (100) lors d'un montage du boîtier de palier (30) sur le bloc-moteur (100),
**caractérisé par le fait que**
d. le palier radial (20) immobilisé dans le boîtier de palier (30) peut exercer un mouvement chancelant autour de deux axes x, y.

2. Dispositif formant palier (1) selon la revendication 1, **caractérisé par le fait que**, lors d'un montage du boîtier de palier (30) sur le bloc-moteur (100), ledit élément amortisseur (40) est monté dans le flux de force entre le boîtier de palier (30) et le bloc-moteur (100).

3. Dispositif formant palier (1) selon la revendication 2, **caractérisé par le fait que**
a. le boîtier de palier (30) présente au moins un premier trou débouchant (32) qui est prévu pour recevoir dans son intérieur, lors d'un montage du boîtier de palier (30) sur le bloc-moteur (100), un boulon de montage (50) pour immobiliser le boîtier de palier (30) sur le bloc-moteur (100), et
b. ledit élément amortisseur (40) est disposé dans ledit premier trou débouchant (32).

4. Dispositif formant palier (1) selon la revendication 1, **caractérisé par le fait que** ledit élément amortisseur (40) présente un deuxième trou débouchant (42) destiné à recevoir le boulon de montage (50).

5. Dispositif formant palier (1) selon la revendication 1, **caractérisé par le fait que** la bague extérieure (24) du palier radial (20) est immobilisée par liaison de force dans le boîtier de palier (30).

6. Dispositif formant palier (1) selon la revendication 1, **caractérisé par le fait que** la bague extérieure (24) du palier radial (20) est immobilisée au moyen d'un élément de sécurité (26) dans le boîtier de palier (30).

7. Dispositif formant palier (1) selon la revendication 1, **caractérisé par le fait que** le boîtier de palier (30) est fabriqué au moyen d'un procédé de coulée à partir d'un matériau métallique.

8. Dispositif formant palier (1) selon la revendication 1, **caractérisé par le fait que** le dispositif (1) comprend en outre un support de boîtier de palier (34) qui
a. forme une première interface mécanique pour la fixation du support de boîtier de palier (34) sur le bloc-moteur (100) du véhicule automobile, et
b. présente une deuxième interface mécanique pour la fixation du boîtier de palier (30) sur le support de boîtier de palier (34),
dans lequel
c. ledit au moins un élément amortisseur (40) est prévu pour être disposé à amortissement de vibrations entre ledit boîtier de palier (30) et le support de boîtier de palier (34) lors d'un montage du boîtier de palier (30) sur le bloc-moteur (100).

9. Dispositif formant palier (1) selon la revendication 1, **caractérisé par le fait que** ledit au moins un élément amortisseur (40) présente une dureté qui se situe dans l'intervalle compris entre 10 et 100 Shore A, de préférence dans l'intervalle compris entre 20 et 60 Shore A.

10. Dispositif formant palier (1) selon la revendication 1, **caractérisé par le fait que** la première fréquence propre du système apte à vibrer se composant de l'arbre intermédiaire (10), de l'arbre moteur (200), de la roue motrice (250) et du dispositif formant palier (1) est inférieure à 50 hertz, de préférence inférieure à 30 hertz.

11. Dispositif formant palier (1) selon la revendication 1, **caractérisé par le fait que** ledit au moins un élément amortisseur (40) est résistant à une température allant jusqu'à 160 °C, de préférence jusqu'à 180 °C.

12. Procédé destiné à supporter en rotation, d'une manière découplée en vibration, un arbre intermédiaire (10) sur le bloc-moteur (100) d'un véhicule automobile, comprenant les étapes de procédé suivantes:
a. fournir un dispositif formant palier (1) qui comprend:
i. un palier radial (20) ayant une bague intérieure (22) destinée à recevoir l'arbre intermédiaire (10), et une bague extérieure (24),
ii. un boîtier de palier (30) qui
1. est réalisé en deux parties et est prévu pour être fixé sur le bloc-moteur (100) du véhicule automobile, et pour recevoir à engagement positif et d'une manière solidaire en rotation ledit palier radial (20) de telle sorte que le palier radial (20) immobilisé dans le boîtier de palier (30) peut exercer un mouvement chancelant autour de deux axes x, y, et
2. qui forme une interface mécanique pour fixer le boîtier de palier (30) sur le bloc-moteur (100) du véhicule automobile, et
iii. au moins un élément amortisseur élastique comme le caoutchouc,
b. monter le boîtier de palier (30) sur le bloc-moteur (100) du véhicule automobile, ledit au moins un élément amortisseur (40) élastique comme le caoutchouc étant disposé à amortissement de vibrations entre ledit boîtier de palier (30) et le bloc-moteur (100).

13. Procédé selon la revendication 12, **caractérisé par le fait que** ledit au moins un élément amortisseur (40) élastique comme le caoutchouc est choisi de telle manière que la première fréquence propre du système apte à vibrer se composant de l'arbre intermédiaire (10), de l'arbre moteur (200), de la roue motrice (250) et du dispositif formant palier (1) est inférieure à 50 hertz, de préférence inférieure à 30 hertz.
